# EUROPEAN PATENT APPLICATION

(11) **EP 2 247 151 A2**
(43) Date of publication of application: **03.11.2010**
(21) Application number: 10004527.7
(22) Date of filing: 29.04.2010
(51) Int. Cl.: H04W 76/02, H04W 84/04, H04W 74/08

(54) **Method of handling identity confusion and related communication device**

(30) Priority: 29.04.2009 US 173606 P; 15.05.2009 US 178500 P
(71) Applicant: HTC Corporation, Taoyuan County 330 (TW)
(72) Inventor: Jen, Yu-Chih, Taoyuan City, Taoyuan County 330 (TW); Chen, Te-Ming, Taoyuan City, Taoyuan County 330 (TW)
(74) Representative: Wagner, Karl H.

(57) **Abstract**

A method of handling identity confusion, in terms of collision of mobile devices' identifiers, in particular cell-level identities, for a network in a wireless communication system is disclosed. The method includes receiving, at the target base station, from a first mobile device a radio resource control (RRC) connection re-establishment request message, which includes a physical cell identity corresponding to a source cell of the first mobile device, and returning a RRC connection re-establishment reject message, due to conflicting identifiers with a second mobile device, and then sending an RRC connection release to the second mobile device.

## Description

The present invention relates to a method and apparatus for handling identity confusion in a wireless communications system.

A long-term evolution (LTE) system, initiated by the third generation partnership project (3GPP), is now being regarded as a radio access technology of which radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

In the LTE system, a physical cell identity (PCI) that is assigned to all LTE cells, is a layer 1 radio signature and can be represented by 504 unique data sequences. The PCI serves as a cell signature that is easily detectable for the UEs. Since virtually all cellular networks deploy more than 504 cells, the PCIs will have to be reused within a network.

A cell radio network temporary identifier (C-RNTI) is a unique code that is used to identify a radio connection of a UE within a cell radio coverage area. Each cell includes a list of C-RNTIs corresponding to the UEs that currently connects with the cell or had ever connected with the cell.

A RRC (Radio Resource Control) connection reestablishment procedure can be can be initiated by the mobile device for reestablishing a RRC connection. The UE initiates the RRC connection reestablishment procedure when any of the following conditions is met:
(i) upon detecting radio link failure; or
(ii) upon handover failure; or
(iii) upon mobility from E-UTRA (Evolved Universal Terrestrial Radio Access) failure; or
(iv) upon integrity check failure indication from lower layers of the RRC layer; or
(v) upon an RRC connection reconfiguration failure.

A RRC connection reestablishment request message that is sent by the UE to initiate the procedure includes a C-RNTI that the UE uses in the source cell and also includes the PCI of the source cell. The networks sends a RRC connection reestablishment message if accepting the request and sends a RRC connection reestablishment reject message if not accepting the request. The UE sends a RRC connection reestablishment complete message after receiving the RRC connection reestablishment message.

In the RRC connection reestablishment procedure, the PCI is the only identity related to the source cell. However, if more than two cells have the same PCI, the target cell will not unserdtand which one is the source cell of the UE. The only known solution is that the target cell (the accessed cell) requests all the cells with the PCI and determines which one the source cell is. However, this solution takes so much time that the time critical contention procedure is impacted. For example, a random access procedure is performed due to the RRC connection reestablishment procedure. A contention resolution timer used for the random access procedure may expire before the accessed cell finishes verifying the source cell, since the verifying takes more time than the contention resolution timer can count. In this situation, the UE does not win the contention resolution even if the UE is qualified for the the contention resolution.

In addition, the UE may perform the RRC connection re-establishment procedure with a new cell whose PCI is the same as the original/source cell, and the C-RNTI of the UE has been already assigned in the new cell (also called the accessed cell). In this situation, the accessed cell does not know whether the UE is originally served by the accessed cell or moves from another cell, there resulting in inappropriately configuring RRC connection of related mobile devices. The abovementioned problem resulting from the same PCIs of the source and the accessed cells is one of PCI confusions.

For example, two cells C1 and C2 neighbor and have the same PCI. A UE1 in the cell C1 and a UE2 in the cell C2 have been assigned the same C-RNTI. When the UE1 initiates a RRC connection reestablishment procedure by sending a RRC connection reestablishment request message to the cell C2, the UE1 informs the cell C2 of the PCI of the cell C1 and the C-RNTI used in the cell C1 via the RRC connection reestablishment request message. In this situation, the abovementioned PCI confusion occurs, and the cell C2 regards the UE1 as the UE2. If the cell C2 rejects the request by sending a RRC connection reestablishment reject message, the UE1 receives the RRC connection reestablishment reject message and may return to the cell C1 or select other cells. However, the cell C2 deletes the received C-RNTI from its C-RNTI list including the C-RNTI of the UE2 since the C-RNTI of the UE1 and UEs are the same. Consequently, the UE2 does not know that its C-RNTI has been removed and becomes invalid for the cell C2. If the UE2 continue to communicate with the cell C2, the cell C2 treats the UE2 as invalid UE. Inappropriate RRC connection configuration imposes on the UE2.

This in mind, the present invention aims at providing a method and apparatus for handling confusion of an identity associated with a cell or a mobile device to avoid inappropriate connection configuration or failure of a procedure associated with the identity.

This is achieved by a method and apparatus for handling identity confusion for a network in a wireless communications system according to claims 1, 4, 8, 12, 15 and 19. The dependent claims pertain to corresponding further developments and improvements.

As will be seen more clearly from the detailed description following below, the claimed method for handling identity confusion for a network in a wireless communication system comprises the steps of receiving from a first mobile device a radio resource control (RRC) connection reestablishment request message including a physical cell identity corresponding to a source cell of the first mobile device, and sending a RRC connection reestablishment reject message in response to the RRC connection reestablishment request message and a RRC connection release message according to a cell-level identity of the mobile device corresponding to the source cell.

### Brief Description of the Drawings

Fig.1 is a schematic diagram of a wireless communication system.
Fig.2 is a schematic diagram of a communication device according to an example of the disclosure.
Fig.3 is a schematic diagram of program code of the communication device according to Fig. 2.
Fig.4-9 are flowcharts of processes according to examples of the disclosure.

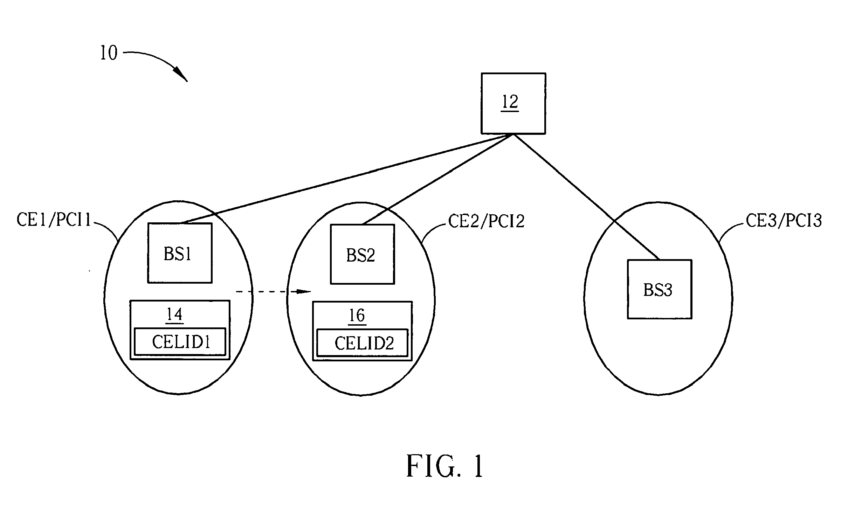

Please refer to Fig. 1, which illustrates a schematic diagram of a wireless communication system 10 according to an example. For simplicity, Fig. 1 illustrates a network controller 12 only managing base stations BS1-BS3, which control cell CE1-CE3 respectively. In fact, the network controller 12 may manage a large number of cells. The network controller 12 and the base stations BS1-BS3 are seen as part of a network of the wireless communication system 10. The cell CE1-CE3 may be open-access cells to which all classes/types of the mobile device subscribers can access or a close-access cells to which only the mobile devices having specific subscriber types are can access. A mobile device 14 is served by the cell CE1 neighboring on the cell CE2 serving a mobile device 16. The network may be an E-UTRAN (evolved-UTAN) comprising a plurality of evolved Node-Bs (eNBs) in a LTE (Long Term Evolution) system or a UTRAN (Universal Terrestrial Radio Access Network) comprising a plurality of Node-Bs (NBs) in a UMTS (Universal Mobile Telecommunications System) system. The UEs can be devices such as mobile phones, computer systems, etc. The mobile devices are aslo referred by user equipments (UEs) and can be devices such as a mobile phone, a personal digital assistant (PDA), a laptop computer or any other devices with a processor, capable of wireless communications. In the LTE system, the close-access cells may be CSG (Closed Subscriber Group) cells depended on the cell reselection mechanism of the mobile device.

The cell CE3 is so far that the mobile device 14 cannot reach signal coverage of the cell CE3. The cells CE1-CE3 have physical cell identities (PCI) PCI1-PCI3, respectively. The PCI1-PCI3 are assigned by the network controller 12 having the number of assignable PCIs quite smaller than the number of the managed cells. As a result, PCI1 and PCI2, PCI1 and PCI3, PCI2 and PCI3, or any other two (or more) cells may be assigned with the same PCI content, and those situations are determined as PCI confusion. In addition, when any PCI sent to a base station is unknown, this is also known as PCI confusion. For example, the mobile device 14 is served by the cell CE1 known as the source cell/serving cell of the mobile device 14 and under a request of the cell CE1 or spontaneously, performs a radio resource control (RRC) procedure with the cell CE2. During the RRC procedure, the mobile device 14 reports the PCI1 to notify the cell CE2 of which cell the mobile device 14 comes from. If the PCI1 is identical to the PC2, the cell CE2 (the base stations BS2) determines that the PCI confusion occurs. The source cell herein is the cell where a mobile device initiates a RRC procedure to a target cell (or called the accessed cell). The accessed cell may also be the source cell.

In addition, the mobile device 14 has a cell-level identity CELID1 for being identifiable for the cell CE1 so that the cell CE1 can know exactly which mobile device is communicated with. The mobile device 16 has a cell-level identity CELID2. Each base station may has a mobile device list that recording the cell-level identities of the mobile device that ever stays in the corresponding cell or currently connected with the cell. The cell-level identities available for each cell may be the same entirely or partially. When the mobile device 14 in the cell CE1 has to perform specific RRC procedures with the cell CE2, the mobile device 14 may notify the cell CE2 of the cell-level identity CELID1, namely, of what cell-level identity is used in the source cell. If the cell CE2 also has an in-use/stored cell-level identity that is identical to the notified cell-level identity CELID1 and the abovementioned PCI confusion occurs, the cell CE2 (the base stations BS2) determines that the confusion of cell-level identity occurs. The cell-level identity can be a C-RNTI (Cell Radio Network Temporary Identifier).

In Fig. 1, the cells CE1 and CE2 may have the same PCI content and further the mobile device 14 and 16 may have been assigned the same cell-level identities. In this situation, the disclosure provides ways and means to prevent the base station BS2 of the cell CE2 from inappropriately configuring the mobile device 16 or confusing the mobile device 14 with 16.

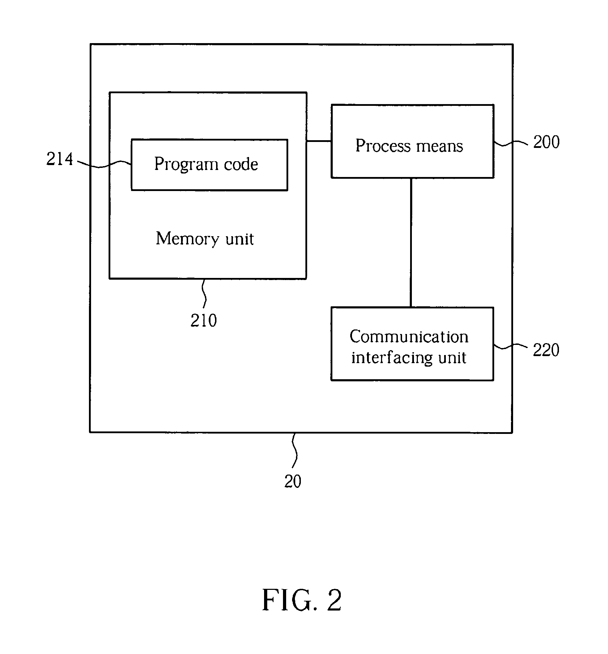

Please refer to FIG. 2, which illustrates a schematic diagram of a communication device 20 according to an example. The communication device 20 may be the mobile device 14, 16 or any of the base stations BS1-BS3 shown in FIG. 1 and may include a processing means 200 such as a microprocessor or ASIC (Application-Specific Integrated Circuit), a memory unit 210 and a communication interfacing unit 220. The memory unit 210 may be any data storage device that can store program code 214 for access by the processing means 200. Examples of the memory unit 210 include but are not limited to a subscriber identity module (SIM), read-only memory (ROM), random-access memory (RAM), CD-ROMs, magnetic tapes, hard disks, and optical data storage devices. The communication interfacing unit 220 may be preferably a radio transceiver and accordingly exchanges wireless signals with other communication devices according to processing results of the processing means 200.

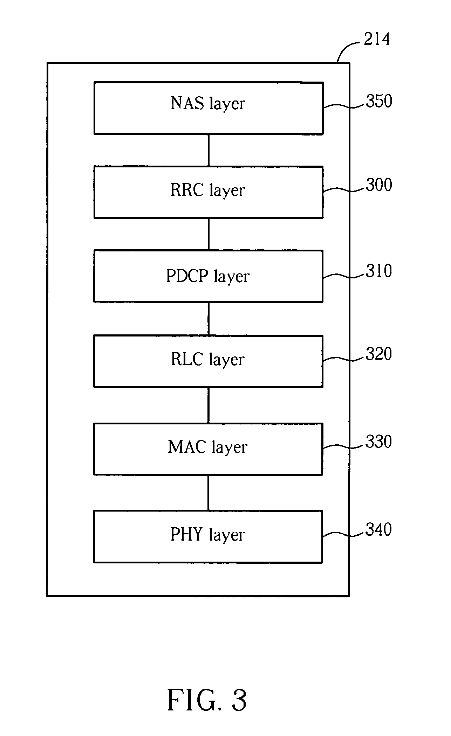

Please refer to Fig. 3, which illustrates a schematic diagram of the program code 214 applied to the LTE system. The program code 214 includes program code of multiple communications protocol layers, which from top to bottom are a non access stratum (NAS) layer 350, a radio resource control (RRC) layer 300, a packet data convergence protocol (PDCP) layer 310, a radio link control (RLC) layer 320, a medium access control (MAC) layer 330 and a a physical (PHY) layer 340.

The RRC layer 300 manages radio bearers for transferring control/user plane data with different quality of service and related RRC procedures modifying the state of RRC connections between the mobile device and the network. A RRC establishment procedure can be initiated by the mobile device in a RRC_IDLE mode for establishing a RRC connection. A RRC connection reestablishment procedure can be can be initiated by the mobile device for reestablishing a RRC connection, which involves the resumption of a signaling radio bearer SRB1 operation and the re-activation of security. Functions of the lower layers of the RRC layer 300 can be controlled via RRC configuration. In addition, The NAS layer 350 can perform procedures for registration, verification, security purposes.

The MAC layer 330 can perform a random access procedure to obtain uplink synchronization for various purposes, such as for the RRC connection establishment/reestablishment purposes. The random access procedure may include a random access preamble corresponding to a message 1 in uplink (from the mobile device to the network), a random access response corresponding to a message 2 in downlink (from the network to the mobile device), a first scheduled uplink transmission corresponding to a message 3, and a contention resolution corresponding to a message 4 in downlink. The random access preamble may be randomly selected by UE, or dedicated preamble assigned by network. The random access response conveys a temporary cell RNTI assigned by the network. Multiple mobile devices may use the same random access preamble and therefore the message 3 including identity of the mobile device is used for contention of the random access. The message 4, if the mobile device receives, means that the mobile device wins the chance of random access. When the RRC connection reestablishment procedure needs to be performed, the mobile device (the communication device 20) first has to select a suitable cell that may be the original cell or other cell, and then the random access procedure is performsed with the selected cell.

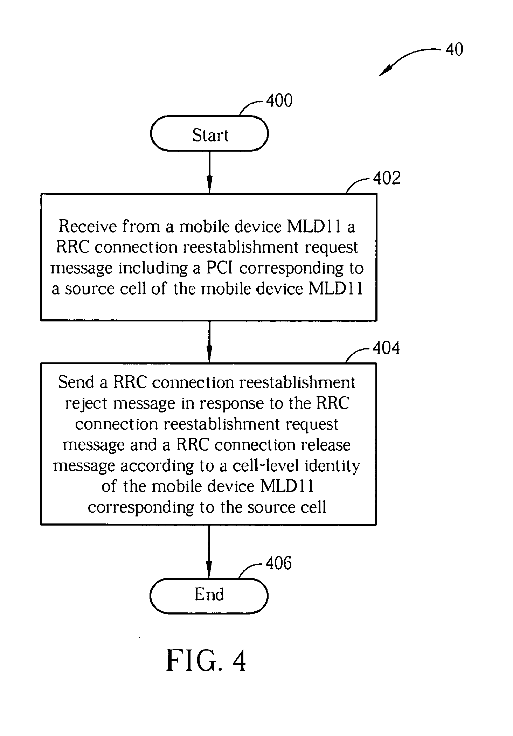

Please refer to FIG. 4, which is a flowchart of a process 40 according to an example. The process 40 is used for handling identity confusion for a network in a wireless communication system (e.g. the network of the wireless communication system 10). The process 40 may be compiled into the program code 214 and includes the following steps:
Step 400: Start.
Step 402: Receive from a mobile device MLD11 a RRC connection reestablishment request message including a PCI corresponding to a source cell of the mobile device MLD11.
Step 404: Send a RRC connection reestablishment reject message in response to the RRC connection reestablishment request message and a RRC connection release message according to a cell-level identity of the mobile device MLD11 corresponding to the source cell.
Step 406: End.

According to the process 40, the mobile device initiates a RRC connection reestablishment procedure and sends the RRC connection reestablishment request message. The network, in response to the RRC connection reestablishment request message, sends the RRC connection re-establishment reject message after the RRC connection re-establishment request message is received from the mobile device MLD11. Furthermore, the network sends the RRC connection release message according to the cell-level identity after the RRC connection re-establishment request message is received. The PCI has been assigned to multiple cells of the network. In other word, the PCI confusion situation occurs in the network. In addition, the network may send the RRC connection re-establishment reject message and the RRC connection release message when the network knows that the PCI is assigned to multiple cells, i.e. when the network is aware of the PCI confusion. In other words, in some examples of the process 40, the networks just do the PCI assignment and may not know how many cells each PCI is assigned to.

By the process 40, the sent RRC connection re-establishment reject message is sent to/received by the mobile device MLD11. The RRC connection reestablishment procedure may be performed on a common control channel. In addition, the network may originally communicates with another mobile device MLD12 that has been assigned the same cell-level identity as the cell-level identity of the mobile device MLD11 before the RRC connection reestablishment request message is received. In this situation, the sent RRC connection release message can be sent to/received by the mobile device MLD12. This is because the RRC connection release message is sent on a channel that has existed between the mobile device MLD12 and the network, and the channel is dedicated to the cell-level identity. Then, the mobile devices MLD11 and MLD12 can be directed to release all corresponding radio resources and enter an RRC_IDLE state by the RRC connection re-establishment reject message and the RRC connection release message, respectively. Thus, mis-configuring of the mobile device MLD12 can be avoided. A mis-configuring example is that the cell-level identity is deleted from a mobile device list of the network, and the mobile device MLD12 is not notified of the deletion and still communicates with the network as normal.

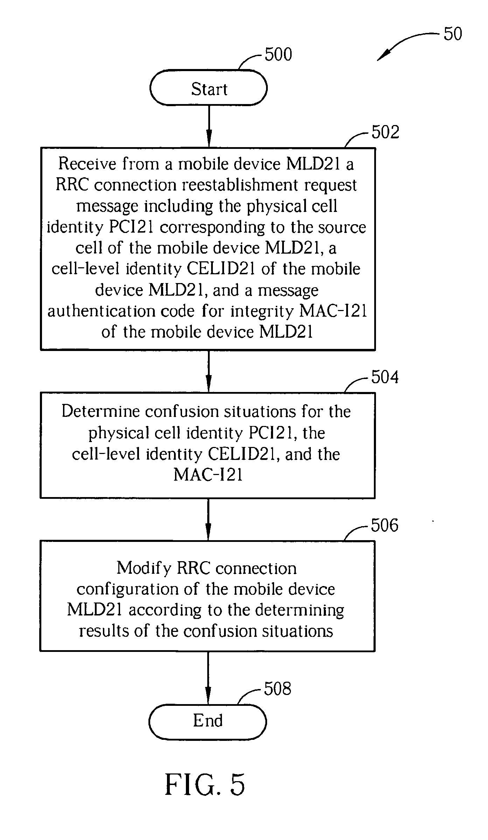

Please refer to FIG. 5, which is a flowchart of a process 50 according to an example. The process 50 is used for handling identity confusion for a cell using a physical cell identity PCI21 in a network of a wireless communication system. The process 50 may be compiled into the program code 214 and includes the following steps:
Step 500: Start.
Step 502: Receive from a mobile device MLD21 a RRC connection reestablishment request message including the physical cell identity PCI2 corresponding to the source cell of the mobile device MLD21, a cell-level identity CELID21 of the mobile device MLD21, and a message authentication code for integrity MAC-I21 of the mobile device MLD21.
Step 504: Determine confusion situations for the physical cell identity PCI21, the cell-level identity CELID21, and the MAC-I21.
Step 506: Modify RRC connection configuration of the mobile device MLD21 according to the determining results of the confusion situations.
Step 508: End.

In the process 50, the cell-level identity PCI21 is originally used as the cell identity of the source cell of the mobile device MLD21 and has been assigned to multiple cells of the network. The cell receiving the RRC connection reestablishment request message (called accessed cell hereinafter) uses the same physical cell identity content (i.e. PCI21) as the source cell. In addition, the MAC-I21 is used to identify and verify the mobile device MLD21 for the RRC connection re-establishment, which may associate security configuration of the source cell. The MAC-I21 may be used as a short MAC-I used in the LTE system. According to the process 50, the accessed cell determines the confusion situations for the physical cell identity PCI21, the cell-level identity CELID21, and the MAC-121. For example, the accessed cell may check whether any of the in-use PCIs/cell-level identities/MAC-is are identical to or associated with the received PCI21/CELID21/ MAC-I21 and thereby determines corresponding confusion situations. Then, the accessed cell modifies the RRC connection configuration of the mobile device MLD21 according to the determining results of the confusion situations. For example, the accessed cell may direct the mobile device MLD21 to release all corresponding radio resources when one of the confusion situations occurs. With the confusion situation determination, the accessed cell can distinguish the mobile device MLD21 from other mobile devices when the mobile device MLD21 has confusion issue with others.

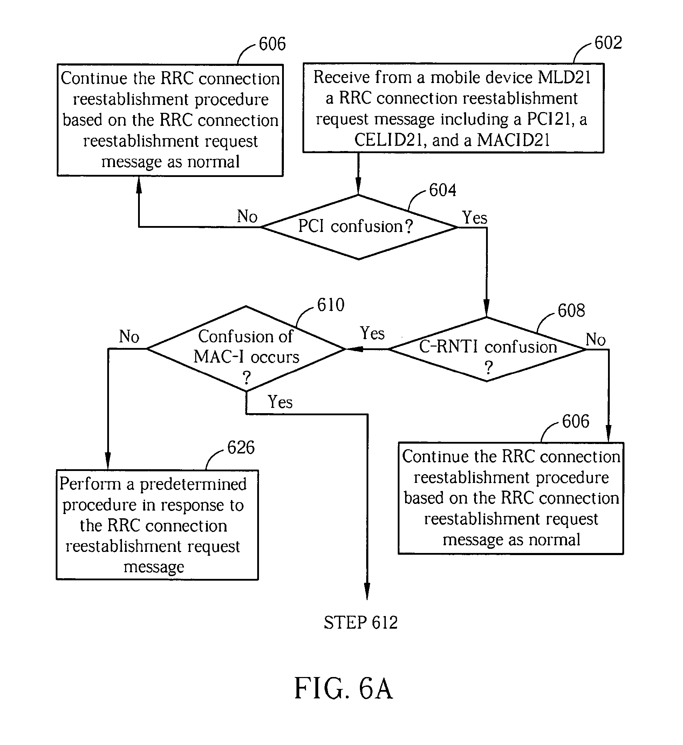

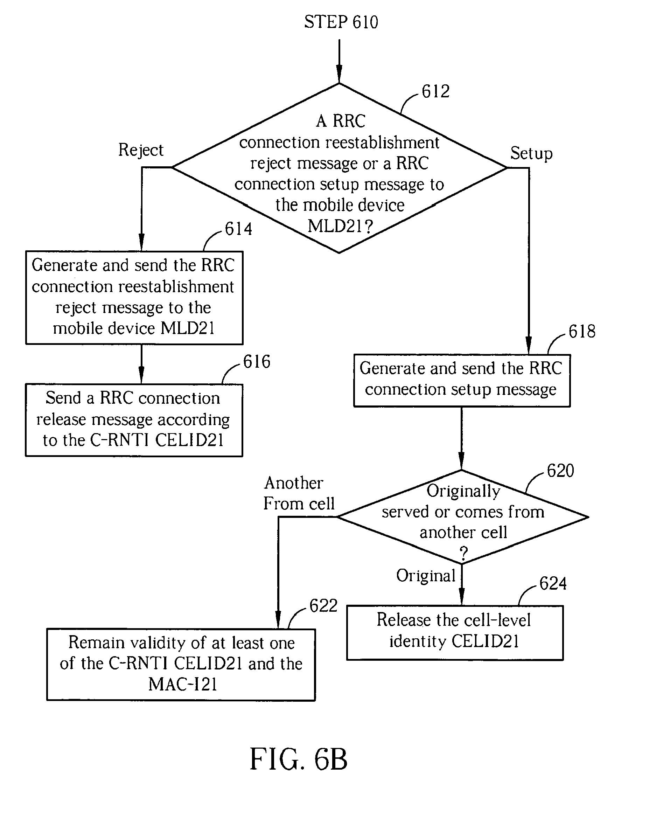

Please refer to FIGs. 6A and 6B, which illustrate a flowchart of a process 60 according to an example. The process 60 is made based on the concept of the process 50, for handling identity confusion for a base station of an accessed cell in a wireless communication system. The process 60 may be compiled into the program code 214 and includes the following steps:
Step 600: Start.
Step 602: Receive from a mobile device MLD21 a RRC connection reestablishment request message of a RRC connection reestablishment procedure, where RRC connection reestablishment request message includes a physical cell identity PCI21, a C-RNTI CELID21, and a MAC-I21.
Step 604: Determine whether a PCI confusion occurs? If yes, perform Step 608; else perform Step 606.
Step 606: Continue the RRC connection reestablishment procedure based on the RRC connection reestablishment request message as normal.
Step 608: Determine whether a C-RNTI confusion occurs? If yes, perform Step 610; else perform Step 606.
Step 610: Determine whether a confusion of MAC-I occurs? If yes, perform Step 612; else perform Step 626.
Step 612: Determine whether to generate a RRC connection reestablishment reject message or a RRC connection setup message to the mobile device MLD21 according to an internal decision. If the RRC connection reestablishment reject message, perform Step 614; else perform Step 618. Step 614: Generate and send the RRC connection reestablishment reject message to the mobile device MLD21.
Step 616: Send a RRC connection release message according to the C-RNTI CELID21.
Step 618: Generate and send the RRC connection setup message triggering the mobile device MLD21 to perform a predefined RRC procedure or a non access stratum (NAS) procedure.
Step 620: According to the predefined RRC procedure or the NAS procedure, determine whether the mobile device MLD21 is originally served by the accessed cell before the reception of the RRC connection reestablishment request message or comes from another cell via the RRC connection reestablishment request message. If the former, perform Step 624; else perform Step 622.
Step 622: Remain validity of at least one of the C-RNTI CELID21 and the MAC-I21.
Step 624: Release the cell-level identity CELID21.
Step 626: Perform a predetermined procedure in response to the RRC connection reestablishment request message.

In the process 60, the PCI confusion means that the PCI21 is identical to the PCI of the accessed cell, that the PCI of the accessed cell is identical to any other cell in the network, that the PCI21 is unknown by the accessed cell, or that the base station is aware that any of two or more cells uses the same PCI. The case that the PCI21 is identical to the PCI of the accessed cell is also regarded as that the PCI21 indicates that the source cell of the mobile device MLD21 is the accessed cell. The C-RNTI confusion and the confusion of MAC-I mean that the CELID21/MAC-I21 is identical to or associated with another C-RNTI/MAC-I in the accessed cell. The "associated with" herein means that the base station checks whether two examining targets are identical to each other or not by indirectly comparing the examining targets. For example, the confusion of MAC-I means that the base station verifies the MAC-I21 through an integrity algorithm and obtained a result and also finds that another MAC-I which is in-use or has been stored has the same result as the MAC-I21. In this situation, the base station determines the confusion of MAC-I occurs because the base station has a MAC-I associated with the MAC-I21.

According to the process 60, the base station first determines whether a PCI confusion occurs, after the RRC connection reestablishment request message of the RRC connection reestablishment procedure is received. If no PCI confusion occurs, the base station continues the RRC connection reestablishment procedure as normal. In other words, the base station may reject or accept the RRC connection reestablishment request from the mobile device MLD21 in accordance with the LTE specification referring to 3GPP (Third Generation Partnership Project) TS 36.331. On the contrary, if PCI confusion occurs, this means that the PCI of the accessed cell I identical to the PCI21. In this situation, the base station further determines whether a C-RNTI confusion occurs. If no C-RNTI confusion occurs, the base station continues the RRC connection reestablishment procedure as normal. If the C-RNTI confusion occurs, this means a C-RNTI that has been originally stored/recorded in the base station or is in-use in the accessed cell is identical to the C-RNTI CELID21. With the determined PCI and C-RNTI confusion, the base station still cannot exactly know whether the mobile device MLD21 comes from the other cell or is a mobile device that originally stays in the accessed cell before the RRC connection reestablishment procedure. In this situation, the base station further determines whether a confusion of MAC-I occurs. If no confusion of MAC-I occurs, this means that the mobile device MLD21 is successfully verified by the accessed cell and then a predetermined procedure in response to the RRC connection reestablishment request message is performed. The predetermined procedure may works as Steps 612-624. On the contrary, if the occurrence of the confusion of MAC-I is confirmed, the base station determines whether to generate a RRC connection reestablishment reject message or a RRC connection setup message according to an internal decision that can be made by system requirement.

When the internal decision indicates generation of RRC connection reestablishment reject message, the base station generates the RRC connection reestablishment reject message based on the RRC connection reestablishment request message and then sends the RRC connection reestablishment reject message to the mobile device MLD21. By this, the mobile device MLD21 knows that the RRC connection reestablishment request is rejected. On the other hand, the base station further sends a RRC connection release message according to the C-RNTI CELID21. The sending of the RRC connection release message works for the purpose of avoiding that another mobile MLD22, originally using the same PCI and C-RNTI in the accessed cell as the mobile device MLD21, has its identity data deleted by the base station and does not know about this, as the mobile device 16 when the mobile device 14 communicates with the cell CE2. In other words, the RRC connection release message is received by the mobile device MLD22, not the mobile device MLD21. In addition, the base station may resynchronize security information with the mobile device MLD22 based on the C-RNTI CELID21. The mobile device MLD21 may return to the source cell or enter the RRC_IDLE mode due to the RRC connection reestablishment reject message.

When the internal decision indicates generation of RRC connection setup message in response to the RRC connection reestablishment request message, the base station generates and sends the RRC connection setup message triggering the mobile device MLD21 to perform the predefined RRC or NAS procedure via which the base station can obtain a subscriber identity information of the mobile device MLD21 from a core network (a back-end network). The NAS procedure may be performed for registration, verification or security purpose. For LTE network, the subscriber identity information may be an international mobile subscriber identity (IMSI) that is unique in the whole LTE network. The mobile device MLD21 may perform the predefined RRC or NAS procedure after the RRC connection re-establishment setup message is received or according to an indication of the RRC connection re-establishment setup message. As a result, according to the predefined RRC or NAS procedure (higher layer procedure), the base station determines whether the mobile device MLD21 is originally served by the accessed cell before the reception of the RRC connection reestablishment request message or comes from another cell via the RRC connection reestablishment request message.

If the mobile device MLD21 is determined as a mobile device originally under coverage of the accessed cell (the former), the base station releases the cell-level identity CELID21. In addition, the base station may assign a new cell-level identity to the mobile device MLD21 and resynchronize security information or the MAC-I for integrity check. On the contrary, if the mobile device MLD21 is determined as a mobile coming from other cell (the latter), this means that the accessed cell is not the source cell and a mobile device MLD22 using the same PCI and C-RNTI (e.g. the mobile device MLD22) as the mobile device MLD21 exists in the accessed cell. In this situation, the base station remains validity of the C-RNTI/the MAC-I of the accessed cell identical to the CELID21/MAC-I21 so that the mobile device MLD22 does not need to waste time and resources in re-gaining the new identities. On the other hand, due to the RRC connection setup message or the predefined RRC or NAS procedure, the mobile device MLD21 further performs a random access procedure and thereby uses a T-RNTI (Temporary Radio Network Temporary Identifier) as new C-RNTI so that the C-RNTIs of the mobile device MLD21 and MLD22 are not identical anymore. Consequently, the MAC-I of the mobile device MLD22 does not need to be resynchronized.

As can be seen in the process 60, the base station determines the C-RNTI confusion when the PCI confusion is confirmed and the base station has another cell-level identity that is identical to or associated with the cell-level identity CELID21. The base station also determines no confusion of MAC-I when the PCI and C-RNTI confusions are both confirmed and the MAC-I21 is not identical to or not associated with any other MAC-I of the accessed cell. Please note that the determination of the MAC-I confusion may not be modified in advance of the determination of the C-RNTI confusion. In this situation, the base station determines no confusion of MAC-I when the PCI confusion is confirmed and the first MAC-I is not identical to or not associated with any other MAC-I of the accessed cell.

As can be seen from the above, the network is able to decide whether to only consider PCI confusion (e.g. same PCI for cells as or not as the new/accessed cell itself or PCI is unknown) or further be able to consider C-RNTI and/or MAC-I confusion. With the confusion determining ability, the network can know whether the mobile device MLD21 comes from other cell or originally stays in the accessed cell, when the mobile device MLD21 has confusion issue with others.

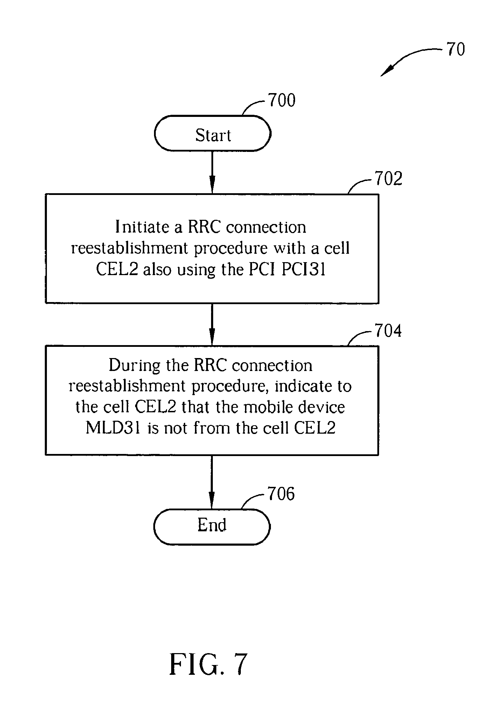

Please refer to FIG. 7, which is a flowchart of a process 70 according to an example. The process 70 is used for handling identity confusion for a mobile device MLD31 served by a cell CEL1 using a PCI PCI31 (e.g. the mobile device 14 or 16 of the wireless communication system 10) in a network of a wireless communication system. The process 70 may be compiled into the program code 214 and includes the following steps:
Step 700: Start.
Step 702: Initiate a RRC connection reestablishment procedure with a cell CEL2 also using the PCI PCI31.
Step 704: During the RRC connection reestablishment procedure, indicate to the cell CEL2 that the mobile device MLD31 is not from the cell CEL2.
Step 706: End.

According to the process 70, the mobile device MLD31 in the cell CEL1 initiates the RRC connection reestablishment procedure with the cell CEL2 having PCI confusion with the cell CEL1. During the RRC connection reestablishment procedure, the mobile device MLD31 then indicates to the cell CEL2 that it is not from the cell CEL2. With the process 70, the cell CEL2 does not confuse the mobile device MLD31 with another mobile device MLD32 that is originally served by the cell CEL2 and has the same cell level identity (e.g. C-RNTI) as the mobile device MLD31. Thus, the cell CE2 can be aware that two mobile devices, MLD31 and MLD32, exist and can do separate RRC connection configuration appropriately.

To indicate the cell CEL2, the mobile device MLD31 may first include a field in a RRC connection reestablishment request message and then send the RRC connection reestablishment request message to the cell CEL2 that based on the field can know whether the mobile device MLD31 is from the cell CEL2 or not. The field may be a C-RNTI reserved for RRC connection reestablishment purpose. In addition, the mobile device MLD31 may receive a RRC connection reestablishment reject message or a RRC connection setup message at the completion of the RRC connection reestablishment procedure and thereby initiating a predefined RRC or NAS procedure for continuing the service which the mobile device attempts to recover via the RRC connection reestablishment procedure.

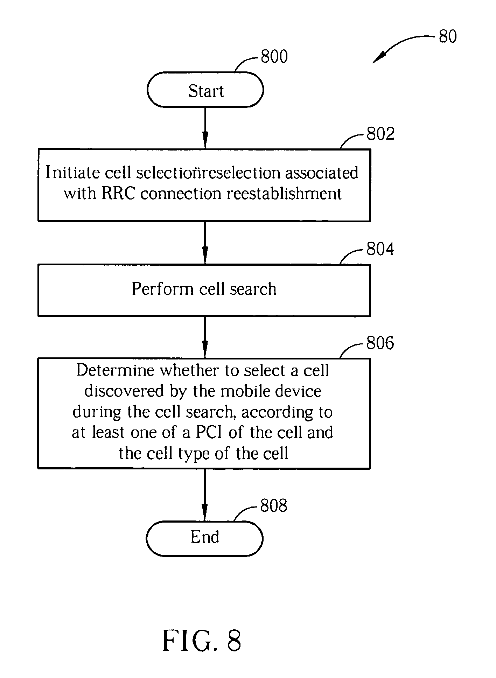

Please refer to FIG. 8, which is a flowchart of a process 80 according to an example. The process 80 is used for handling identity confusion for a mobile device in a network including a plurality of cells in a wireless communication system. The process 80 may be compiled into the program code 214 and includes the following steps:
Step 800: Start.
Step 802: Initiate cell selection/reselection associated with RRC connection reestablishment.
Step 804: Perform cell search.
Step 806: Determine whether to select a cell discovered by the mobile device during the cell search, according to at least one of a PCI of the cell and the cell type of the cell.
Step 808: End.

According to the process 80, the mobile device initiates cell selection/reselection when needing to perform the RRC connection reestablishment. In the cell selection/reselection, the mobile device performs the cell search and thereby discovers at least a cell. Then, the mobile device determines whether to select the discovered cell(s), according to at least one of the PCI(s) of the discovered cell(s) and the cell type(s) thereof. In addition, the mobile device may send a request message for RRC connection establishment or for RRC connection reestablishment to the selected cell.

Thus, the mobile device may select the discovered cell when any of the following condition is met:
(A1) when (a11)the discovered cell is a CSG cell type and (a12)the discovered cell is a source cell that serves the mobile device right before the initiation of the cell selection or reselection; or
(A2) when (a21)the discovered cell is the CSG cell type, (a22) the PCI of the discovered cell is not identical to the PCI of the source cell, and (a23)the PCI of the discovered cell causes a PCI confusion in which the PCI is identical to a PCI of another cell that is not the source cell or is unknown by the discovered cell; or
(A3) when (a31)the discovered cell is the CSG cell type, (a32) the PCI of the discovered cell is not identical to the PCI of the source cell, and (a33)the PCI of the discovered cell does not cause the PCI confusion, i.e. the PCI of the discovered cell is not identical to the PCIs of any other cells; or
(A4) when (a41)the discovered cell is a CSG cell type, (a42)the discovered cell is not the source cell and (a43)the discovered cell is the only suitable cell or the only cell that the mobile device discovers during the cell search; or (A5) when (A3) is met and the discovered cell is the only suitable cell or the only cell that the mobile device discovers during the cell search.

In other words, the mobile device may not select the discovered cell when any of the following condition is met:
(B1) when the discovered cell is not a CSG (closed subscriber group) cell; or
(B2) when (b21)the discovered cell is the CSG cell type, (b22) the discovered cell is not the source cell, and (b23)the PCI of the discovered cell is identical to the PCI of the source cell; or
(B3) when (b31)the discovered cell is the CSG cell type, (b32) the discovered cell is not the source cell, (b33)the PCI of the discovered cell is identical to the PCI of the source cell, and (b34) the discovered cell is not the only one that the mobile device discovers during the cell search; or
(B4) when (B2) is met and (b41) the discovered cell is not the only suitable cell or not the only one that the mobile device discovers during the cell search; or (B5) when (B3) is met and (b51) the discovered cell is not the only suitable cell or not the only one that the mobile device discovers during the cell search.

Duplication of PCIs may only happen to CSG cells. With the process 80, when the PCI confusion happens, the accessed cell does not need to spend a lot of time in searching for the source cell of the mobile device before responding to UE with a contention resolution or a message 4 of a random access procedure used for the RRC connection reestablishment.

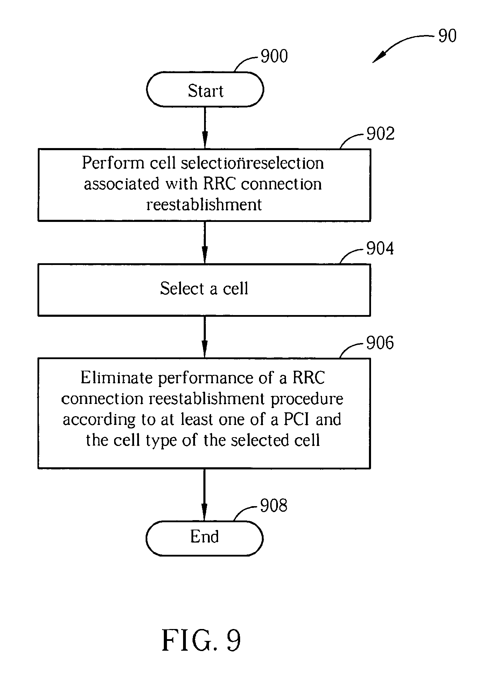

Please refer to FIG. 9, which is a flowchart of a process 90 according to an example. The process 90 is used for handling identity confusion for a mobile device in a network of a wireless communication system (e.g. the network of the wireless communication system 10). The process 90 may be compiled into the program code 214 and includes the following steps:
Step 900: Start.
Step 902: Perform cell selection/reselection associated with RRC connection reestablishment.
Step 904: Select a cell.
Step 906: Eliminate performance of a RRC connection reestablishment procedure according to at least one of a PCI and the cell type of the selected cell.
Step 908: End.

According to the process 90, the mobile device performs the cell selection/reselection for the RRC connection reestablishment purpose. Then, a cell is selected when the cell selection or reselection is performed. The mobile device eliminates performance of the RRC connection reestablishment procedure according to at least one of a PCI and the cell type of the selected cell. For example, the mobile device may eliminate the performance of the RRC connection reestablishment procedure when the selected cell is a CSG cell and the PCI causes PCI confusion. The elimination of the performance of the RRC connection reestablishment procedure may be stopping to perform the RRC connection reestablishment procedure that has not been initiated yet or stopping performing an on-going RRC connection reestablishment procedure. Thus, the elimination of the RRC connection reestablishment procedure eliminates the potential problem resulting from the confusions of PCI/cell-level identity, as mentioned above.

Furthermore, the mobile device performs a RRC connection establishment procedure with the selected cell instead of the RRC connection reestablishment procedure. With the RRC connection establishment, the mobile device does not need to inform the selected cell of any information about the device itself and the source cell. In the RRC connection establishment procedure, a RRC connection establishment request message sent by the mobile device may include a specific field indicating to the network that the RRC connection establishment procedure is initiated for the RRC connection re-establishment purpose. The specific field may be an "establishment cause" field. Accordingly, the network responds a RRC connection setup message including configuration of the RRC connection that the mobile device attempts to establish. The mobile device establishes the RRC connection and if successfully, sends a RRC connection setup complete message to indicate the success of the RRC connection establishment procedure. After this, the RRC layer of the mobile device sends an indicator to request the upper layer (e.g. the NAS layer) to perform a service continuing procedure with the selected cell. The service continuing procedure allows the mobile device to continue the service that is received before the cell selection/reselection. Alternatively, the service continuing procedure may be initiated by the network when the network receives the RRC connection setup complete message.

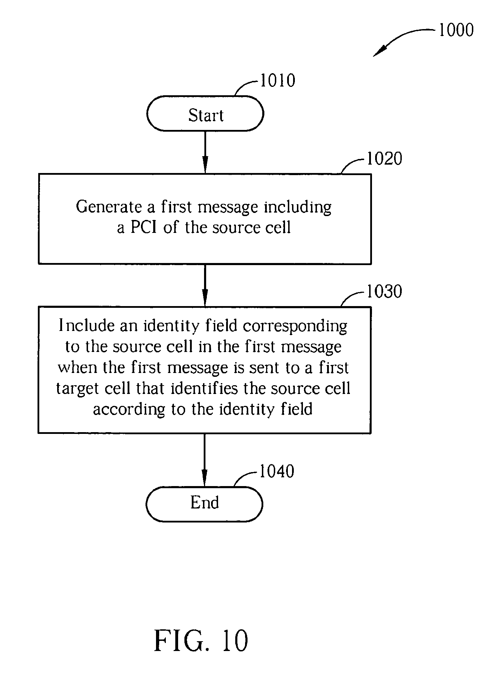

Please refer to FIG. 10, which is a flowchart of a process 1000 according to an example. The process 1000 is used for handling identity confusion for a mobile device served by a source cell in a network of a wireless communication system (e.g. the network of the wireless communication system 10). The process 1000 may be compiled into the program code 214 and includes the following steps:
Step 1010: Start.
Step 1020: Generate a first message including a PCI of the source cell.
Step 1030: Include an identity field corresponding to the source cell in the first message when the first message is sent to a first target cell that identifies the source cell according to the identity field.
Step 1040: End.

According to the process 1000, the mobile device includes the identity field in the first message, in addition to the PCI of the source cell. The mobile device may perform a procedure associated with the RRC, MAC or PHY layer via the first message with the target cell. According to the identity field, the target cell identifies the source cell and/or rejects/accepts requests included in the first message. As a result, if a PCI confusion associated with the PCI of the source cell occurs, the target cell can still know exactly which cell the mobile device comes from. In other words, the target cell does not confuse the source cell with a cell that uses the same PCI as the source cell. Then, the target cell can require the accurate source cell for information of the mobile device to avoid failure of the procedure.

Furthermore, the mobile device may include an indicator, used for indicating a RAT (Radio Access Technology) version or RAT capability of the mobile device, in the first message. For example, the indicator can indicate whether the mobile device uses a 3GPP release 8 or 9 version of the LTE specification. The release 8 version represents the LTE RAT prior to the release 9 version. In addition, the indicator may indicate what RATs the mobile device is capable of or currently uses, e.g. the LTE and UMTS RATs. The identity field may include at least one of a serving temporary mobile subscriber identity (S-TMSI), a cell identity and a CSG identity. The S-TMSI is unique in a tracking area of the LTE system. The cell identity and CSG cell identity are unique in the LTE RAT.

In addition, the first message may be the RRC connection reestablishment request message or a message of the random access procedure (e.g. a message 3). With the process 1000, the target cell can directly determine which cell is the correct source cell, during either of the abovementioned procedure. In other words, the target cell does not need to spend more time in finding out the correct source cell among a bunch of cells using the same PCI than the valid time of receiving a message of the RRC connection reestablishment procedure/random access procedure. Thus, the procedure failure can be avoided. Moreover, if a target cell using the release 8 version of the LTE system may not need to identify neither according to the PCI nor according to the identity field or may not need to know which cell the mobile device come from, the mobile device includes no identity field/indicator in the first message.

As can be seen from the above, the mobile device may include the identity field and/or RAT version or RAT capability in the RRC connection reestablishment request message or in the random access procedure (e.g. message 3) when the version of both mobile device and target cell use the release 9 or above version. Furthermore, the mobile device may transmit different formats of the message 3 for Release-8 and release-9/above target cell. In this situation, the mobile device may not include the identity field in the RRC connection reestablishment request message or in the random access procedure when the RAT version of the target cell is release 8. Moreover, the mobile device may transmit the same format of message 3 to release-8/9/above target cell. In this situation, the mobile device may include the identity field as mentioned above. And the release-8 target cell ignores the identity field and adopts the PCI.

The identity field may be included in the first message by reducing the PCI size or replacing the PCI. Take an example. The cell identity defined in the LTE specification 3GPP TS 36.331 is 28-bit long. The original size of the RRC connection reestablishment request message defined in the TS 36.331 is 48-bit long, including a 44-bit UE-Identity (12-bit PCI, C-RNTI, and MAC-I), a 2-bit "reestablishmentCause" and 2 spare bits. The size of the message 3 has to satisfy a 72-bit uplink grant. As can be seen from the above, the total size of the cell identity and the defined RRC connection reestablishment request message is 76-bit, over 72-bit. To include the cell identity in the message 3, two ways are provide as below. One way is to reduce the PCI size from 12 to 10 or 9 bits in order to make space for the defined cell identity. The other way is to replace PCI by the defined cell identity, only applying to the release 9/above target cell. In addition, the CSG identity is defined 27-bit long and can be included in the message 3 by the same method as the defined cell identity.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the exampled methods and related means can distinguish mobile devices/cells under identity confusion or prevent occurrence of identity confusion/procedure failure.

## Claims

1. A method of handling identity confusion for a network in a wireless communication system (10), **characterized by** the method comprising:
receiving from a first mobile device a radio resource control, hereinafter called RRC, connection reestablishment request message including a physical cell identity corresponding to a source cell of the first mobile device, wherein the physical cell identity has been assigned to a plurality of cells of the network (402); and
sending a RRC connection reestablishment reject message in response to the RRC connection reestablishment request message and a RRC connection release message according to a cell-level identity of the mobile device corresponding to the source cell (404).

2. The method of claim 1, **characterized in that** sending the RRC connection reestablishment reject message in response to the RRC connection reestablishment request message and the RRC connection release message according to the cell-level identity is sending the RRC connection reestablishment reject message in response to the RRC connection reestablishment request message and the RRC connection release message according to the cell-level identity when the network knows that the physical cell identity is assigned to a plurality of cells.

3. The method of claim 2, **characterized in that** sending the RRC connection reestablishment reject message in response to the RRC connection reestablishment request message and the RRC connection release message according to the cell-level identity comprises:
sending the RRC connection reestablishment reject message to the first mobile device; and
sending the RRC connection release message to a second mobile device having the cell-level identity according to the cell-level identity;
whereby the first mobile device releases all corresponding radio resources when the RRC connection reestablishment reject message is received, and the second mobile device releases all corresponding radio resources when the RRC connection release message is received.

4. A method of handling identity confusion for a base station controlling a first cell in a network of a wireless communication system (10), **characterized by** the method comprising:
receiving from a first mobile device a radio resource control hereinafter called RRC, connection reestablishment request message including the first physical cell identity, hereinafter called PCI, corresponding to a source cell of the first mobile device, a first cell-level identity of the first mobile device, and a message authentication code for integrity, hereinafter called MAC-I, of the first mobile device (502);
determining confusion situations for the first PCI, the first cell-level identity, and the first MAC-I (504); and
modifying RRC connection configuration of the first mobile device according to the determining results of the confusion situations (506).

5. The method of claim 4, **characterized in that** determining the confusion situations for the first PCI, the first cell-level identity, and the first MAC-I comprises:
determining a confusion of PCI when the first PCI is identical to a second PCI of the first cell, when the second PCI is identical to the PCI of any other cell in the network, when the first PCI is unknown by the first cell, or when the base station is aware that any of two or more cells in the network uses the same PCI;
determining a confusion of cell-level identity when the confusion of PCI is confirmed and the base station has a second cell-level identity that is identical to or associated with the first cell-level identity, wherein the second cell-level identity is stored in the base station or in use for a second mobile device; and
determining no confusion of MAC-I when the confusion of PCI is confirmed and
the first MAC-I is not identical to or not associated with a second MAC-I of the second mobile device or when the confusions of PCI and cell-level identity are both confirmed and the first MAC-I is not identical to or not associated with a second MAC-I of the second mobile device.

6. The method of claim 4, **characterized in that** modifying the RRC connection configuration of the first mobile device according to the determining results of the confusion situations comprises:
sending a RRC connection reestablishment reject message or a RRC connection setup message to the first mobile device in response to the RRC connection reestablishment request message when the base station determines that both a confusion of PCI and a confusion of cell-level identity occur and no confusion of MAC-I occurs.

7. The method of claim 6, **characterized in that** modifying the RRC connection configuration of the first mobile device according to the determining results of the confusion situations further comprises:
sending a RRC connection release message according to the first cell-level identity after the RRC connection reestablishment reject message is sent to the first mobile device; and
synchronizing security information with a second mobile device receiving the RRC connection release message; or
modifying the RRC connection configuration of the first mobile device according to the determining results of the confusion situations further comprises:
according to a predefined RRC procedure or a non access stratum, hereinafter called NAS, procedure triggered by the sent RRC connection setup message,
determining whether the first mobile device is served by the first cell before the reception of the RRC connection reestablishment request message or comes from a second cell via the RRC connection reestablishment request message,
wherein the predefined RRC procedure or the NAS procedure is initiated by the first mobile device in response to the RRC connection setup message;
remaining validity of at least one of the first cell-level identity and the first MAC-I corresponding to the first cell when the base station determines that the first mobile device comes from the second cell to the first cell via the RRC connection reestablishment request message (622);
releasing the first cell-level identity or assigning a third cell-level identity to the first mobile device when the base station determines that the first mobile device is served by the first cell before the reception of the RRC connection reestablishment request message (624); and
synchronizing security information or the first MAC-I with the first mobile device.

8. A method of handling identity confusion for a mobile device served by a first cell having a first physical cell identity in a network of a wireless communication system (10), **characterized by** the method comprising:
initiating a radio resource control, hereinafter called RRC, connection reestablishment procedure with a second cell having a second physical cell identity identical to the first physical cell identity (702); and
during the RRC connection reestablishment procedure, indicating to the second cell that the mobile device is not from the second cell (704).

9. The method of claim 8, **characterized in that** during the RRC connection reestablishment procedure indicating to the second cell that the mobile device is not from the second cell comprises:
including a field used for indicating to the network that the mobile device is from a cell that is not the second cell is not the second cell and uses the physical cell identity, in a RRC connection reestablishment request message;
and
sending the RRC connection reestablishment request message to the second cell.

10. The method of claim 9, **characterized in that** the field is a cell radio technology network identity reserved for RRC connection reestablishment.

11. The method of claim 8 further comprising:
receiving a RRC connection reestablishment reject message or a RRC connection setup message at the completion of the RRC connection reestablishment procedure; and
initiating a predefined RRC procedure or a non access stratum, hereinafter called NAS, procedure for continuation of a service that the mobile device receives before the initiation of the RRC connection reestablishment procedure.

12. A method of handling identity confusion for a mobile device served in a network including a plurality of cells in a wireless communication system (10), **characterized by** the method comprising:
initiating cell selection or reselection associated with radio resource control,
hereinafter called RRC, connection reestablishment (802);
performing cell search of the cell selection or reselection (804); and
determining whether to select a first cell discovered by the mobile device during the cell search, according to at least one of a first physical cell identity, hereinafter called PCI, of the first cell and the cell type of the first cell (806).

13. The method of claim 12, **characterized in that** determining whether to select the first cell according to at least one of the first PCI and the cell type of the first cell comprises:
selecting the first cell when the first cell is a CSG, hereinafter called closed subscriber group, cell type and is a source cell that serves the mobile device right before the initiation of the cell selection or reselection;
selecting the first cell when the first cell is the CSG cell type, the first PCI is not identical to a second PCI of the source cell and the first PCI causes a PCI confusion in which the first PCI is identical to a second PCI of a second cell that is not the source cell or unknown by the first cell;
selecting the first cell when the first cell is the CSG cell type and the first PCI is not identical to PCIs of any other cells;
selecting the first cell when the first cell is the CSG cell type and not the source cell and the first cell is the only cell that the mobile device discovers during the cell search and the first PCI is identical to the PCI of the source cell and the not identical to the second PCI; and
selecting the first cell when the first cell is the CSG cell type, the first PCI is not identical to the second PCI, the first PCI causes the PCI confusion and the first cell is the only cell that the mobile device discovers during the cell search and the first PCI is not identical to the PCI of the source cell and causes the PCI confusion.

14. The method of claim 12 further comprising:
sending a request message for RRC connection establishment or for RRC connection reestablishment to the first cell when the first cell is selected.

15. A method of handling identity confusion for a mobile device served in a network including a plurality of cells in a wireless communication system (10), **characterized by** the method comprising:
performing cell selection or reselection associated with radio resource control, hereinafter called RRC, connection reestablishment (902);
selecting a first cell when the cell selection or reselection is performed (904); and
eliminating performance of a RRC connection reestablishment procedure according to at least one of a first physical cell identity of the first cell and the cell type of the first cell (906).

16. The method of claim 15 further comprising:
performing a RRC connection establishment procedure with the first cell; and
performing a service continuing procedure with the first cell when the RRC connection establishment procedure is successfully completed.

17. The method of claim 15, **characterized in that** eliminating the performance of the RRC connection reestablishment procedure with the first cell according to at least one of the first physical cell identity and the cell type of the first cell comprises:
stopping to perform the RRC connection reestablishment procedure that has not been initiated yet, according to at least one of the first physical cell identity and the cell type of the first cell; or
stopping performing an on-going RRC connection reestablishment procedure according to at least one of the first physical cell identity and the cell type of the first cell.

18. The method of claim 15, **characterized in that** eliminating the performance of the RRC connection reestablishment procedure according to at least one of the first physical cell identity and the cell type of the first cell comprises:
eliminating the performance of the RRC connection reestablishment procedure when the first cell is a CSG, hereinafter called closed subscriber group, cell type and the first physical cell identity is identical to a second physical cell identity of a second cell.

19. A method of handling identity confusion for a mobile device served by a source cell in a wireless communication system (10), **characterized by** the method comprising:
generating a first message including a physical cell identity of the source cell (1020); and
including an identity field corresponding to the source cell in the first message when the first message is sent to a first target cell that identifies the source cell according to the identity field (1030).

20. The method of claim 19, **characterized in that** the first message is a radio resource control, hereinafter called RRC, connection reestablishment request message or a message of a random access procedure.

21. The method of claim 19, **characterized in that** the identity field includes at least one of a serving temporary mobile subscriber identity, hereinafter called S-TMSI, a cell identity and a close subscriber group, hereinafter called CSG, identity.

22. The method of claim 19 further comprising including an indicator, used for indicating a version or capability of a radio access technology of the mobile device, in the first message.

23. The method of claim 19 further comprising: not including the identity field in the first message when the first message is sent to a second target cell that identify the source cell neither according to the physical cell identity nor according to the identity field.

24. The method of claim 19, **characterized in that** including the identity field in the first message when the first message is sent to the first target cell comprises:
reducing the size of the physical cell identity and then including the identity field in the first message when the first message is sent to the first target cell;
or
replacing the physical cell identity by the identity field when the first message is sent to the first target cell.
